# EUROPEAN PATENT SPECIFICATION

(11) **EP 2 395 698 B1**
(45) Date of publication and mention of the grant of the patent: **13.08.2014**
(21) Application number: 10165765.8
(22) Date of filing: 11.06.2010
(51) Int. Cl.: H04L 9/32

(54) **Implicit certificate generation in the case of weak pseudo-random number generators**
Generierung von impliziten Zertifikaten im Kontext von schwachen Zufallszahlgeneratoren
Génération de certificats implicites dans le contexte de générateurs aléatoires faibles

(43) Date of publication of application: 14.12.2011
(73) Proprietor: Certicom Corp., Mississauga, Ontario L4W 0B5 (CA)
(72) Inventor: Vanstone, Scott A, Mississauga Ontario L4W 5L1 (CA)
(74) Representative: Moore, Barry

(56) References cited:
- US-A1- 2005 114 651
- EUN-JUN YOON ET AL: "An Optimizing Authenticated Key Exchange Protocol for Self-organizing Sensor Networks" 1 January 2006 (2006-01-01), UBIQUITOUS COMPUTING SYSTEMS LECTURE NOTES IN COMPUTER SCIENCE;;LNCS, SPRINGER, BERLIN, DE, PAGE(S) 537 - 546 , XP019045631 ISBN: 978-3-540-46287-3 * sub-section 2.1 * * *
- QIANG HUANG AND JOHNAS CUKIER AND HISASHI KOBAYASHI AND BEDE LIU AND JINYUN ZHANG ED - ASSOCIATION FOR COMPUTING MACHINERY: "Fast authenticated key establishment protocols for self-organizing sensor networks" ACM WSNA 2003. PROCEEDINGS OF THE 2ND.ACM INTERNATIONAL WORKSHOP ON WIRELESS SENSOR NETWORKS & APPLICATIONS; [ACM INTERNATIONAL WORKSHOP ON WIRELESS SENSOR NETWORKS AND APPLICATIONS. (WSNA)], NEW YORK ,NY : ACM, US, 1 January 2003 (2003-01-01), pages 141-150, XP009137731 ISBN: 978-1-58113-764-4
- BROWN D R L ET AL: "Provably secure implicit certificate schemes" FINANCIAL CRYPTOGRAPHY, [Online] vol. 2339, 1 January 2002 (2002-01-01), pages 156-165, XP002524293 ISBN: 978-3-540-24128-7

## Description

The following relates generally to the field of cryptography.

As communications have progressed into the electronic domain, information has become easy to copy and disseminate. The prevalence of electronic communication has made for many productivity advances, and an increase in knowledge and information sharing. However, due to the ease of dissemination, there is an ever increasing need for privacy and authentication in electronic communications.

To retain privacy, the method of encrypting data using a key is very well known. In asymmetric key cryptographic protocols, computing devices, commonly referred to as correspondents, share a common secret key. This key must be agreed upon by the correspondents, and its secrecy maintained throughout the data communication.

Public key cryptographic protocols were first proposed in 1976 by Diffie-Hellman. A public-private key pair is created for each correspondent, with the public key made available to other parties, and the private key information maintained secret by the correspondent who will be the recipient of messages. Any message encrypted using the public key of a recipient can only be decrypted using the private key of that same recipient. The private key cannot be derived from the knowledge of the plaintext, ciphertext and public-key.

Cryptographic systems utilise protocols that are based on so called "hard" problems. These problems can be formulated quickly, but do not have efficient solution algorithms. Problems such as integer factorization and the discrete logarithm problem fall into this category.

Integer factorisation is the basis of a set of protocols known as RSA which uses, as a modulus n, the product of two large *primes, p, q.* A second modulus (D is computed as *(p-1)(q-1).* A random integer e is selected so that 1<*e*<Φ and gcd(e,1) .= 1. A value *d* is selected so that 1 <*d*<Φ and *ed*=1 mod Φ. A correspondent's public key is then (*n,e*) and the corresponding private key is d.

To send a message to a correspondent, the recipient's public key *(n,e)* is obtained and the message represented as an integer m in the interval [0,*n-1*]. The ciphertext *c* of message m is computed as *c=m^{e}* mod *n* and sent to the recipient correspondent. The recipient can decrypt and recover the plaintext from c by computing *m*=*c^{d}* mod *n.*

The RSA algorithm is a deterministic algorithm requiring the selection of the large primes *p, q.* However, as integer factorisation techniques have improved, it has become necessary to use larger moduli, and, consequently, the computational efficiency has decreased.

The discrete log problem forms the basis for discrete log cryptographic systems that include Diffie Hellman key agreement protocols and ElGamal encryption and signature schemes. The problem is expressed as follows: given a finite cyclic group ***G*** of order *n,* a generator α of the group ***G***, and an element β of the group ***G,*** find the integer *x* such that α*^{x}=β.* Knowing the values α, *β* and the group ***G,*** it is considered infeasible to determine the integer x provided the number of elements *n* in ***G*** satisfies certain properties. In practical implementations, a random number generator is used to generate the random integer *x*, and the integer x is used as a private key by the correspondent. A corresponding public key is computed as α^{x} and distributed publically to other correspondents. The public and private keys are used according to well known protocols to encrypt and decrypt messages sent between parties, to authenticate a message signed by one party using a private key, or to establish a common key between the parties by combining the public key of one party with the private key of another.

These protocols can be implemented practically in any group in which both the discrete logarithm problem is hard and the group operation is efficient. One example of such a group is the elliptic curve cyclic group defined over the finite field *F*ₚ composed of integers from 0 to *p-1*, where *p* is a prime number. The group elements are points lying on a defined elliptic curve and having coordinates that are elements of the underlying field. An elliptic curve group typically utilises an additive notation, rather than the multiplicative notation used above, so that a *k*-fold group operation of a point *P* requires the point *P* to be added k times and is written *kP.* A cryptographic system implemented using an elliptic curve group is known as an elliptic curve cryptographic system, or ECC. Other groups commonly used are multiplicative groups, such as the non-zero integers *Fₚ* and the corresponding *k*-fold group operation is denoted α*^{k} ,* where α is a generator of the group.

Although the discrete log problem is considered intractable, the security of the cryptographic system depends on the cryptographic strength of the random number *x.* A random number generator (RNG) is designed to provide cryptographically strong random numbers, but, due to malfunction, poor selection of a seed, or malicious tampering, the RNG may output relatively weak random numbers. This is a particular problem in constrained devices, such as cell phones and smart cards, where low cost implementations may not have sufficient entropy to provide a robust random number generator. As a result, publication of the public key may inadvertently disclose the corresponding private key, and, depending on the protocol implemented, may in turn yield information pertaining to other private keys used in the protocol.

Yoon and Yoo in an article entitled "An Optimising Authenticated Key Exchange Protocol for Self-organising Sensor Networks" (XP019045631) disclose an improved protocol in order to address the problem that a security manager can learn the long-term private key of a sensor.

US-A-2005/114651 discloses a method of generating a public key in a secure digital communication system, having at least one trusted entity CA and subscriber entities A. For each entity A, the trusted entity selects a unique identity distinguishing the entity A. The trusted entity then generates a public key reconstruction public data of the entity A by mathematically combining public values obtained from respective private values of the trusted entity and the entity A. The unique identity and public key reconstruction public data of the entity A serve as A's implicit certificate. The trusted entity combines the implicit certificate information with a mathematical function to derive an entity information f and generates a value kA by binding with f with private values of the trusted entity. The trusted entity transmits the value kA to the entity to permit A to generate a private key from kA, A's private value and A's implicit certificate. The entity A's public key information may be reconstructed from public information, and A's implicit certificate.

### GENERAL

In general terms, the following may provide a technique for masking the output of a random number generator (RNG). In one embodiment, the output of this RNG may be used by a correspondent as a private value, for example, an ephemeral private key. The correspondent may then generate a corresponding public key. However, direct scrutiny of this public key (which could lead to exposure of the corresponding private value due to a weakness of the RNG) may be avoided during transmission by encrypting the public key with a deterministic encryption scheme, such as RSA, before distributing the public key in a public manner. The deterministic encryption scheme does not rely on the output of the RNG for its strength and therefore may effectively mask the public key and the private value used to generate the public key.

The encrypted public key may be received by a trusted party who can decrypt it and recover the public key. The trusted party may utilise the public key in combination with other information to avoid direct exposure of the public key to third parties. Preferably, the trusted party generates an implicit certificate that incorporates, but does not directly expose, the public key. The implicit certificate can then be used by the correspondent in communications with other correspondents.

In the following there is preferably provided a method of establishing a private key for use in a public key cryptographic system established between computing devices according to claim 1. There is also preferably provided a computer readable medium There is also preferably provided a computing device for use in a cryptographic system according to claim 8. There is also preferably provided a computer readable medium comprising computer executable instructions which when executed cause the computer to perform the method of any of claim 1 and its dependent claims.

In the following there is also preferably provided a method of one computing device, acting as a trusted party, generating a certificate, for use by another correspondent in a public key cryptographic system according to claim 12. There is also preferably provided a computer readable medium There is also preferably provided a computing device for use in a cryptographic system configured to perform the steps of the method of claim 12. There is also preferably provided a computer readable medium comprising computer executable instructions which when executed cause the computer to perform the method of any of claim 12 and its dependent claims.

### BREIF DESCRIPTION

The following shows an embodiment of a key establishment protocol by way of example only with reference to the appended drawings wherein:
Figure 1 is a schematic representation of a data communication system.
Figure 2 is a representation of a cryptographic unit used in the system of Figure 1.
Figure 3 is a schematic representation of the steps performed by the system of Figure 1.
Figure 4 is a schematic representation of the flow of information within the system of Figure 1.
Figure 5 is a schematic representation of a method of establishing a private key from the perspective of the requestor.
Figure 6 is a schematic representation of the method of Figure 5 from the perspective of the trusted party.

### DESCRIPTION OF PREFERRED EMBODIMENTS

Embodiments will now be described with reference to the figures. It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

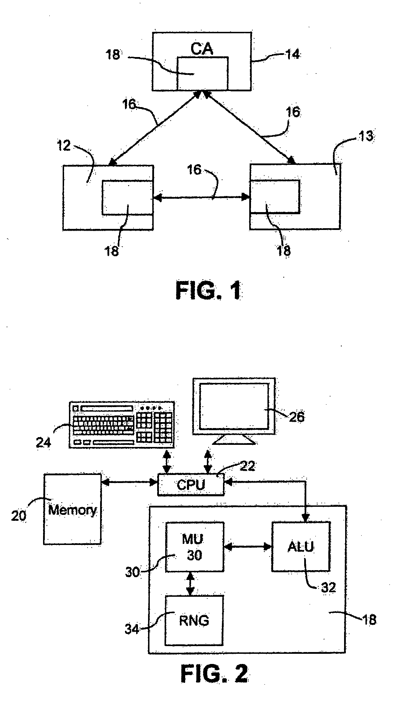

Referring to Figure 1, a data communication system includes a pair of correspondents 12, 13 connected by a communication link 16. The correspondents 12, 13, are connected through link 16 to a mutually trusted correspondent 14, that is referred to as a certifying authority (CA). The correspondents 12, 13 are computing devices, such as a personal computer, personal digital assistant, smart phone, cellular phone, ATM, Point of Sale device, server, entertainment system component, or other such device having a computing capability and the ability to exchange digital information with other correspondents. The CA 14 is also a computing device, typically a server with a secure module for maintaining keys and performing cryptographic processes. The CA 14 is itself connected to higher level CA's providing a trusted hierarchy in well known manner.

The communication link 16 may be a telephone link, wireless or landline, local area network (LAN), RF link, or other such link provided to transfer information between the correspondents. Although shown for illustrative purposes as direct connection between correspondents 12, 13 and CA 14, it will be appreciated that the communication link 16 may be part of a more extensive network and that the link may be routed through multiple correspondents in passing from correspondent 12 to correspondent 13 or CA 14.

Each of the correspondents 12, 13 and CA 14 is similar in operation when communicating over the link 16 and therefore only one will be described in detail. Referring therefore to Figure 2, correspondent 12 includes a cryptographic unit 18 that communicates with a memory 20 and a processor 22. The correspondent may also include a data input unit 24, such as a keypad or card reader, and a display device, 26, depending on the intended purpose of the correspondent 12.

The cryptographic unit 18 is provided to manage secure communications between the correspondents 12, 13 and CA 14 over the communication link 16. The cryptographic unit 18 includes a secure memory 30, which may be part of the memory 20 or a separate memory module, and an arithmetic logic unit (ALU), 32, that operates under the control of the processor 22 to perform arithmetic operations necessary to implement a chosen cryptographic protocol. The processor 22 includes one or more instruction sets to implement respective protocols.

It will be appreciated that any module or component exemplified herein that executes instructions may include or otherwise have access to non-transient computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the cryptographic unit or accessible or connectable thereto. Any application or module herein described may be implemented using computer readable/executable instructions that may be stored or otherwise held by such computer readable media.

The memory 30 stores the parameters of the cryptographic schemes and protocols to be implemented by the cryptographic unit 18. In the present example, the cryptographic unit 18 may execute a program to implement a public key elliptic curve cryptographic system in which cryptographic protocols are implemented based on the intractability of the discrete log problem in an elliptic curve group defined over a finite field. The memory 30 therefore stores the generator point G, the parameters of the curve, and the order, *n*, of the elliptic curve group ***G***.

The memory 30 will also store securely a long term or static private key *q*, and the corresponding public key *Q (=kG).*

The cryptographic unit 18 may also execute a deterministic cryptographic scheme, typically a RSA integer factorisation scheme, although other deterministic schemes could be used. The memory 30 therefore stores a private key, *d*, that has a corresponding public key *(n, e*). The memory 30 also stores the RSA public key *(n', e')* of the correspondent 13 and the public key (*n", e*") of the CA 14.

The cryptographic unit 18 may also execute a program to implement a symmetric encryption protocol utilising a shared secret key.

The cryptographic unit 18 also includes a random number generator 34, whose output is provided in a secure manner to memory 30 for use by the ALU 32. The ALU 32 uses the bit string as an input to a key derivation function (KDF) that outputs a session private key *x*, that is a bit string derived from the output of the random number generator 34. The session key x is stored securely in memory 30 and used by the ALU 32 in generating an ephemeral or session public key *xG*.

A session public key *X* corresponding to the session private key *x* is generated in the ALU 32 by performing an *x*-fold addition of the point *G* so that *X=xG.* This value is stored in memory 30. The computation is performed in the ALU 32 using point multiplication algorithms and the bit string representing the private key *x*. Suitable algorithms are well known in the art and described at section 3.3 of the Guide to Elliptic Curve Cryptography, Hankerson et al., Springer-Verlag, 2004 and so need not be described in further detail.

The memory 30 of the correspondent 13, and CA 14 will similarly have RNG's to generate respective session private keys *y* and z, and corresponding respective session public keys *Y* and *Z*, where *Y=yG* and *Z*=*zG.* Similarly, each of the correspondent 13 and CA 14 securely store RSA private keys *(d'), (d")* respectively and distribute their public keys *(n', e') (n", e").*

The discrete log based protocols, such as those used in ECC, typically require the generation of key pair for each session and hence the use of the RNG 34 for each session. To mitigate the recovery of the ephemeral private key from the public key due to a weak RNG, the deterministic encryption scheme is used to blind the public key until such time as the ephemeral public key is masked by other computations.

In one embodiment, the correspondents 12, 13 implement via the link 16, an implicit certificate protocol using the respective cryptographic unit 18.

An implicit certificate protocol enables two correspondents to communicate without the recipient explicitly verifying a signature on a certificate of the sender's public key from the certification authority CA. The recipient receives an implicit certificate of the sender from which the recipient may recover the sender's ephemeral public key.

An example of such a protocol is that known as Elliptic Curve Qu-Vanstone (ECQV), and is described, for example, in the Standards for Efficient Cryptography publication "SEC 4: Elliptic Curve Qu-Vanstone Implicit Certificate Scheme".

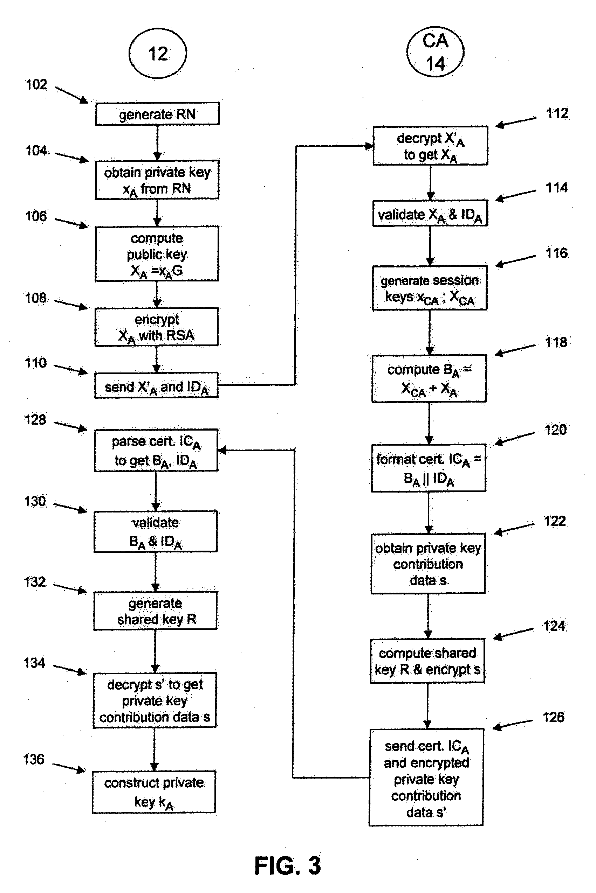

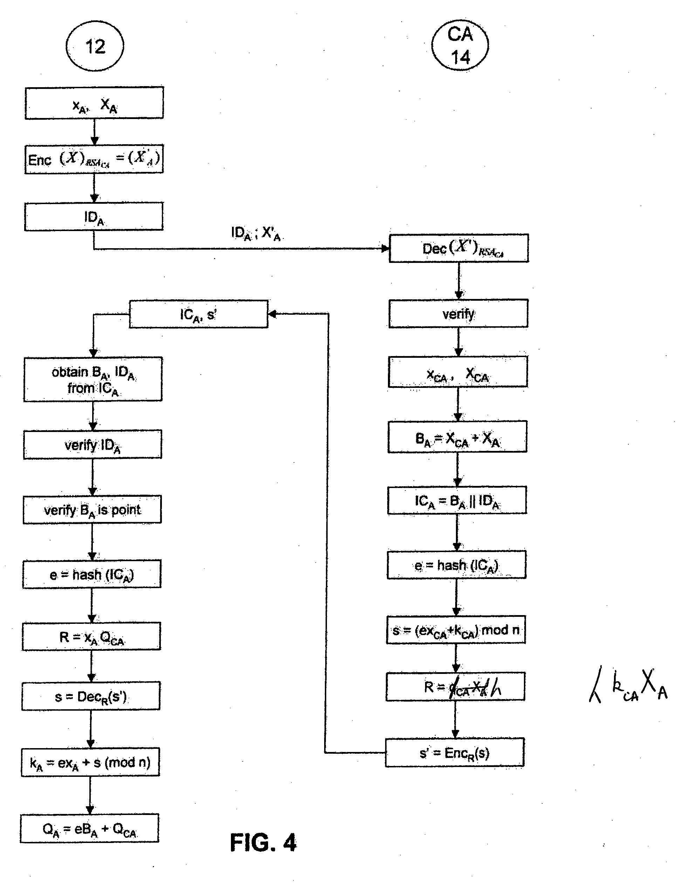

The initial step of such a protocol is to perform a certificate enrolment between the sender and the CA. The sequence of steps and the flow of information is shown in Figures 3 and 4 respectively.

For the purpose of the description, the parameters associated with correspondent 12 will be denoted with a suffix A, those with correspondent 13 will be denoted with a suffix B and those with the correspondent 14 with a suffix CA.

Each of the correspondents 12, 13 has, in its memory 30, a copy of the long term or static public key *Q_{CA}* of the CA 14, and the CA 14 has the corresponding private key *k_{CA}* securely stored in its memory 30.

Similarly, each of the correspondents 12, 13 has the RSA public key of the CA 14 stored in memory.

The correspondent 12 initiates the certificate enrolment by generating a random bit string at the output of the RNG 34 as indicated at step 102. At step 104 the cryptographic unit uses the RNG output as an input to a key derivation function, which may simply be a truncation of a bit string, to obtain a private value that in the illustrated embodiment is an ephemeral private key *x_{A}*.

The cryptographic unit 18 then computes (step 106) the corresponding public value, an ephemeral public key, using the base point *G* to obtain the point *x_{A}G* = *X_{A},* which is to be used by the CA 14 to generate the implicit certificate and private key contribution data for correspondent 12.

To blind the ephemeral public key *x_{A}*, the cryptographic unit 18 uses, at step 108, the RSA public key *(n",e")* of the CA 14 to encrypt the ephemeral public key *X_{A}* and obtain the encrypted message *X_{A}*'. The encrypted message *X_{A}*', together with the identifying information, *ID_{A}*, of the correspondent 12 is sent over the link 16 to the CA 14 (step 110).

The CA 14 uses its RSA private, *d",* key to decrypt the message *X_{A}*' and recover the ephemeral public key *X_{A}.* It will be apparent that any third party intercepting the message from the correspondent 12 will be unable to recover public key *X_{A}* as the RSA private key remains secret to the CA 14. Moreover, the use of the deterministic cryptographic scheme does not require the use of the RNG 34, and therefore avoids the potential vulnerability if a weak RNG 34 is used.

Once the public key *X_{A}* is recovered, at step 112, the cryptographic unit 18 of the CA 14 performs a validation to ensure the key *X_{A}* satisfies the necessary criteria for a public key, e.g. that it is a point on the elliptic curve and is not an element of a small subgroup or the point at infinity. Similarly, the identity information, *ID_{A}*, is validated for content (step 114) and if both are found satisfactory the cryptographic unit 18 of the CA 14 proceeds to the next step, indicated at 116, and uses the RNG 34 in the CA 14 to generate an ephemeral private key *x_{CA}.* A corresponding public key *x_{CA}G = X_{CA}* is then computed by the cryptographic unit 18 of the CA 14.

The ephemeral public keys *X_{A}* and *X_{CA}* are combined, as at step 118, to obtain a new point *B_{A}* which is the public key reconstructions data for correspondent 12. The point *B_{A}* is concatenated with the identification *ID_{A}* of the correspondent 12, to provide an implicit certificate *IC_{A}* (step 120).

At step 122, the private key contribution data, *s*, is generated by the cryptographic unit 18. This is done by hashing the certificate *IC_{A}* using a cryptographically secure hash, such as *SHA2,* to obtain a value *e*. The private key reconstruction data *s* is obtained from *s* = *ex_{CA} + k_{CA}* (mod *n*). The cryptographic unit 18 combines the values from the memory 30 performing integer arithmetic and modular reduction.

As *s* is the private key reconstruction data for the correspondent 12, it must be sent securely to the correspondent 12. This is done by generating a common key *R* from a combination of the long term private key *k_{CA}* of the CA 14 and the ephemeral public key *X_{A}* of the correspondent 12 (step 124). Thus *R = k_{CA}X_{A} = k_{CA}x_{A}G.* The correspondent 12 may generate the same key *R* from the private key *x_{A}* and the long term public key *Q_{CA}* of the CA 14 as *R = x_{A}Q_{CA} =x_{A}k_{CA}G.*

The shared key *R* is used by the cryptographic unit to encrypt the private key reconstruction data *s* using a symmetric encryption scheme to obtain the encrypted message s'.

The encrypted message *s*' and the implicit certificate *IC_{A}* is then sent to the correspondent 12 over the link 16 (step 126)

The correspondent 12 initially parses the certificate *IC_{A}* to obtain the public key reconstruction data, namely point *B_{A},* and the identity information *ID_{A}* (step 128). The identity information *ID_{A}* and point *B_{A}* are validated (step 130) and the shared key *R* obtained by computing *x_{A} Q_{CA},* as indicated at 132.

The shared key *R* is used to decrypt the message s' and obtain *s* (step 134) from which the private key *k_{A}* associated with the implicit certificate *IC_{A}* can be obtained. The private key *k_{A}* is obtained from *ex_{A}* + *s* (mod *n*), where *e* is the hash of the certificate *IC_{A}* (step 136). It will be noted that generation of *R* and *k_{A}* requires the use of the ephemeral private key *x_{A}* which is only known to the correspondent 12.

The certificate public key *K_{A}* corresponding to the private key *k_{A}* is computed as *K_{A}=eB_{A} + Q_{CA},* using the value *B_{A}* received in the certificate and the long term public key of the CA 14 that is stored in the memory 30 of the correspondent 12.

The public key *Q_{A}* can therefore be computed by any correspondent, e.g. correspondent 13, who receives the implicit certificate *IC_{A}* and has the public key of the CA 14.

To send information between correspondents 12 and 13 over the link 16 therefore, the correspondent 12 may use the key pair *k_{A}, Q_{A}* and for example sign the information using *k_{A}*. The recipient 13 receives the signed information and the implicit certificate *IC_{A}* and can recover the public key *Q_{A}* by computing *e* from the certificate *IC_{A}*, parsing *B_{A}* from the certificate *IC_{A}*, and using the public key *Q_{CA}* of the CA 14.

During the certificate enrolment and the subsequent use of the implicit certificate, it will be noted that the public key *X_{A}* obtained from the private key *x_{A}* is not directly exposed to scrutiny. When initially sent to the CA 14, the public key *X_{A}* is blinded by the encryption using a deterministic scheme which does not utilise the RNG 34.

The implicit certificate *IC_{A}* provides the point *B_{A}*, which is a combination of the ephemeral keys *X_{A}* and *X_{CA}.* The ephemeral key of the CA 14 is generated by the RNG of the CA, which can be assumed to provide an output that is cryptographically acceptable. Therefore the combination of the potentially vulnerable public key *X_{A}* with the secure public key *X_{CA}* masks the public key *X_{A}* and inhibits retrieval of the private key *x_{A}.*

The shared key *R*, which uses the private key *x_{A}*, is maintained secret and therefore does not expose the private key *x_{A}* to allow others to reconstruct the shared key *R*.

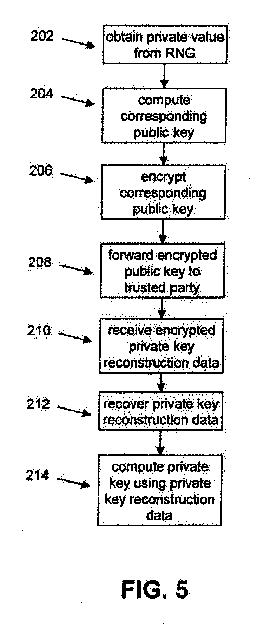

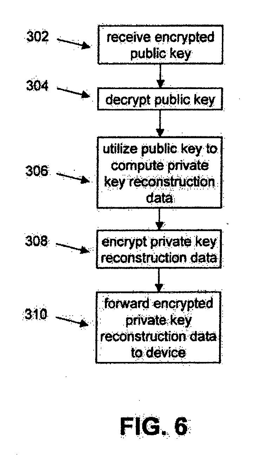

The embodiment shown in Figures 3 and 4 is only one specific embodiment. More generally, a method is contemplated for establishing a private key for use in a public key cryptographic system. The method is described with reference Figures 5 and 6, and it will be appreciated that the method can be performed by computing devices configured to perform the operations, or that Figures 5 and 6 can comprise a set of computer readable instructions executed by the computing devices.

First, in step 202, the device wishing to establish the private key obtains a private value from an output of the random number generator 34. Then, in step 204, a corresponding public key is computed from the private value.

Next, in step 206, the corresponding public key is encrypted using a deterministic encryption scheme to establish an encrypted public key, and in step 208 the encrypted public key is forwarded to a computing device acting as a trusted party.

In step 210, the device receives from the trusted party encrypted private key reconstruction data. In step 212, a decryption key is used to recover the private key reconstruction data, and in step 214, the private key is computed from the private key reconstruction data. The private key is a discrete log private key corresponding to a discrete log public key made publicly available. This private key may be subsequently used in a transfer of information with a recipient of the corresponding discrete log public key.

Figure 6 describes the method of Figure 5 from the perspective of the trusted party. In step 302, the trusted party receives from the device the encrypted public key transmitted in step 208. Then, in step 304, the trusted party decrypts the public key using the deterministic encryption scheme to obtain the public key.

In step 306, the trusted party utilizes the public key to generate the private key reconstruction data, and it is encrypted in step 308.

In step 310, the trusted party forwards the encrypted private key reconstruction data to the device, which uses it as described in steps 210 to 214.

Although the techniques above have been described with reference to certain specific embodiments, various modifications thereof will be apparent to those skilled in the art.

## Claims

1. A method of establishing a private key k_{A} for use in a public key cryptographic system established between a first correspondent computing device (12) and a second correspondent computing device (13), each of said first computing device (12) and said second computing device (13) comprising a cryptographic unit (18) to perform cryptographic operations, said method comprising said first correspondent computing device (12):
a) establishing (104) a private value x_{A} from an output of a random number generator (34);
b) computing (106) a corresponding public key X_{A} from said private value x_{A};
c) encrypting (108) said corresponding public key X_{A} using a deterministic encryption scheme to establish an encrypted public key X_{A}', said encrypted public key X_{A}' encrypted using a first public key of a trusted party;
d) forwarding (110) said encrypted public key X_{A}' to said trusted party (14);
e) receiving (128) from said trusted party (14) encrypted private key reconstruction data and an implicit certificate, said implicit certificate based upon said corresponding public key X_{A} and a trusted party public key X_{CA};
f) applying (134) a decryption key (R) to recover said private key reconstruction data, said decryption key corresponding to a combination of said private value x_{A} and a long term public key Q_{CA} of said trusted party (14);
g) computing (136) said private key k_{A} from said private key reconstruction data, said private key k_{A} being a discrete log private key corresponding a public key Q_{A} of the first computing device;
whereby said first correspondent computing device (12) may use said private key k_{A} in a transfer of information with said second correspondent computing device (13) including said implicit certificate, and whereby said second correspondent computing device (13) able to receive said implicit certificate and recover said public key Q_{A} of the first computing device from said implicit certificate and said trusted party public key Q_{CA},.

2. The method according to claim 1, wherein said deterministic encryption scheme is an RSA encryption scheme and said first public key of said trusted party (14) is an RSA public key.

3. The method according to claim 1 or 2, wherein said implicit certificate contains public key reconstruction data and an identity of said first correspondent computing device (12).

4. The method according to claim 3, wherein said private key reconstruction data is a combination of said implicit certificate, an ephemeral private key *x_{CA}* of said trusted party (14) and a long term private key *k_{CA}* of said trusted party (14).

5. The method according to claim 4, wherein said private key reconstruction data has the form *ex_{CA}+ k_{CA}* (*mod n*), wherein *e* is a hash of said implicit certificate, and n is the order of a group over which said cryptographic system is implemented.

6. A computing device (12) for use in a cryptographic system to exchange information with other devices using public key cryptographic protocols, said device (12) comprising:
a cryptographic unit (18) having a random number generator (34);
a memory (30) to store parameters of said cryptographic system; and
an arithmetic logic unit (32) to perform cryptographic operations,
wherein said cryptographic unit (18) is operable to:
generate a private value X_{A} from an output of said random number generator (34);
compute a corresponding public key X_{A} from said private value x_{A};
encrypt said public key X_{A} with a deterministic encryption scheme, said encrypted public key X_{A}' encrypted using a first public key of a trusted party (14);
forward said encrypted public key X_{A}' to said trusted party (14);
receive encrypted private key reconstruction data and an implicit certificate from said trusted party (14);
apply a decryption key (R) to recover said private key reconstruction data, said decryption key corresponding to a combination of said private value x_{A} and a long-term public key Q_{CA} of said trusted party (14); and,
obtain therefrom a private key k_{A} for use in communications with other devices (13).

7. The computing device (12) according to claim 6, wherein said first public key of said trusted party (14) is an RSA public key of said trusted party (14) stored on said memory (30).

8. The computing device according to claim 7, wherein said first public key of said trusted party (14) is a discrete log public key.

9. A method for a trusted party computing device (14) generating an implicit certificate for use by a first correspondent (13) in a public key cryptographic system, said method comprising said trusted party computing device (14):
receiving from another correspondent (12) an encrypted public key X_{A}';
decrypting said encrypted public key X_{A}'using a deterministic encryption scheme to obtain a public key X_{A}, said public key X_{A} decrypted using a private key d" of said one computing device (14);
utilising said public key X_{A} to generate private key reconstruction data for use by said another correspondent (12);
encrypting said private key reconstruction data by combining said public key X_{A} and another private key k_{CA} of said one computing device (14) to obtain a new key R, and encrypting said private key reconstruction data using said new key R; and
forwarding said encrypted private key reconstruction data to said another correspondent (12).

10. The method according to claim 9, wherein said private key d" of said one computing device (14) is an RSA private key and said deterministic decryption scheme is an RSA decryption scheme.

11. The method according to claim 9 or 10, wherein said another private key k_{CA} of said one computing device (14) is a long term private key of said one computing device (14).

12. The method according to any one of claims 9 to 11, wherein said private key reconstruction data has the form *ex_{CA}* + *k_{CA}* (mod *n*), wherein:
*e* is a hash of an implicit certificate,
*x_{CA}* is an ephemeral private key of said trusted party (14),
*k_{CA}* is a long term private key of said trusted party (14), and
n is the order of a group over which said cryptographic system is implemented.

13. The method according to any one of claims 9 to 12, further comprising generating an implicit certificate containing public key reconstruction data and an identity of said another correspondent (12), and sending said implicit certificate to said another correspondent (12).

## Patentansprüche

1. Ein Verfahren zum Erstellen eines privaten Schlüssels k_{A} zur Verwendung in einem kryptographischen "öffentlicher Schlüssel"-System zwischen einer ersten Korrespondent-Computervorrichtung (12) und einer zweiten Korrespondent-Computervorrichtung (13), wobei jede der ersten Computervorrichtung (12) und der zweiten Computervorrichtung (13) eine kryptographische Einheit (18) zum Durchführen von kryptographischen Operationen aufweist, wobei das Verfahren aufweist, dass die erste Korrespondent-Computervorrichtung (12):
a) einen privaten Wert x_{A} aus einer Ausgabe eines Zufallszahlgenerators (34) erstellt (104);
b) einen entsprechenden öffentlichen Schlüssel X_{A} aus dem privaten Wert x_{A} berechnet (106);
c) den entsprechenden öffentlichen Schlüssel X_{A} unter Verwendung eines deterministischen Verschlüsselungsschemas verschlüsselt (108), um einen verschlüsselten öffentlichen Schlüssel X_{A} zu erstellen, wobei der verschlüsselte öffentliche Schlüssel X_{A}' unter Verwendung eines ersten öffentlichen Schlüssels einer vertrauenswürdigen Partei verschlüsselt wird;
d) den verschlüsselten öffentlichen Schlüssel X_{A}' an die vertrauenswürdige Partei (14) weiterleitet (110);
e) verschlüsselte "privater Schlüssel"-Rekonstruktionsdaten und ein implizites Zertifikat von der vertrauenswürdigen Partei (14) empfängt (128), wobei das implizite Zertifikat auf dem entsprechenden öffentlichen Schlüssel X_{A} und einem öffentlichen Schlüssel X_{CA} der vertrauenswürdigen Partei basiert;
f) einen Entschlüsselungsschlüssel (R) anwendet (134) zur Wiederherstellung der "privater Schlüssel"-Rekonstruktionsdaten, wobei der Entschlüsselungsschlüssel einer Kombination des privaten Werts X_{A} und eines öffentlichen Langzeit-Schlüssels Q_{CA} der vertrauenswürdigen Partei (14) entspricht;
g) den privaten Schlüssel k_{A} aus den "privater Schlüssel"-Rekonstruktionsdaten berechnet (136), wobei der private Schlüssel k_{A} ein privater Schlüssel eines diskreten Logs ist entsprechend einem öffentlichen Schlüssel Q_{A} der ersten Computervorrichtung;
wobei die erste Korrespondent-Computervorrichtung (12) den privaten Schlüssel k_{A} in einer Übertragung von Information mit der zweiten Korrespondent-Computervorrichtung (13) verwenden kann, einschließlich das implizite Zertifikat, und wobei die zweite Korrespondent-Computervorrichtung (13) fähig ist zum Empfangen des impliziten Zertifikats und Wiederherstellen des öffentlichen Schlüssels Q_{A} der ersten Computervorrichtung aus dem impliziten Zertifikat und dem öffentlichen Schlüssel Q_{CA} der vertrauenswürdigen Partei.

2. Das Verfahren gemäß Anspruch 1, wobei das deterministische Verschlüsselungsschema ein RSA-Verschlüsselungsschema ist und der erste öffentliche Schlüssel der vertrauenswürdigen Partei (14) ein öffentlicher RSA-Schlüssel ist.

3. Das Verfahren gemäß Anspruch 1 oder 2, wobei das implizite Zertifikat "öffentlicher Schlüssel"-Rekonstruktionsdaten und eine Identität der ersten Korrespondent-Computervorrichtung (12) enthält.

4. Das Verfahren gemäß Anspruch 3, wobei die "privater Schlüssel"-Rekonstruktionsdaten eine Kombination des impliziten Zertifikats, eines kurzlebigen privaten Schlüssels x_{CA} der vertrauenswürdigen Partei (14) und eines privaten Langzeit-Schlüssels k_{CA} der vertrauenswürdigen Partei (14) sind.

5. Das Verfahren gemäß Anspruch 4, wobei die "privater Schlüssel"-Rekonstruktionsdaten die Form ex_{CA} + k_{CA} (mod n) haben, wobei e ein Hash des impliziten Zertifikats ist und n die Ordnung einer Gruppe ist, über die das kryptographische System implementiert ist.

6. Eine Computervorrichtung (12) zur Verwendung in einem kryptographischen System zum Austauschen von Information mit anderen Vorrichtungen unter Verwendung von kryptographischen "öffentlicher Schlüssel"-Protokollen, wobei die Vorrichtung (12) aufweist:
eine kryptographische Einheit (18) mit einem Zufallszahlgenerator (34);
einen Speicher (30) zum Speichern von Parametern der kryptographischen Systems; und
eine arithmetische Logikeinheit (32) zum Durchführen von kryptographischen Operationen,
wobei die kryptographische Einheit (18) betriebsfähig ist zum:
Erzeugen eines privaten Werts x_{A} aus einer Ausgabe des Zufallszahlgenerators (34);
Berechnen eines entsprechenden öffentlichen Schlüssels X_{A} aus dem privaten Wert x_{A};
Verschlüsseln des öffentlichen Schlüssels X_{A} mit einem deterministischen Verschlüsselungsschema, wobei der verschlüsselte öffentliche Schlüssel X_{A}' unter Verwendung eines ersten öffentlichen Schlüssels einer vertrauenswürdigen Partei (14) verschlüsselt wird;
Weiterleiten des verschlüsselten öffentlichen Schlüssels X_{A}' an die vertrauenswürdige Partei (14);
Empfangen von verschlüsselten "privater Schlüssel"-Rekonstruktionsdaten und eines impliziten Zertifikats von der vertrauenswürdigen Partei (14) ;
Anwenden eines Entschlüsselungsschlüssels (R) zur Wiederherstellung der "privater Schlüssel"-Rekonstruktionsdaten, wobei der Entschlüsselungsschlüssel einer Kombination des privaten Werts x_{A} und eines öffentlichen Langzeit-Schlüssels Q_{CA} der vertrauenswürdigen Partei (14) entspricht; und
Erlangen davon eines privaten Schlüssels k_{A} zur Verwendung in Kommunikationen mit anderen Vorrichtungen (13).

7. Die Computervorrichtung (12) gemäß Anspruch 6, wobei der erste öffentliche Schlüssel der vertrauenswürdigen Partei (14) ein öffentlicher RSA-Schlüssel der vertrauenswürdigen Partei (14) ist, der in dem Speicher (30) gespeichert ist.

8. Die Computervorrichtung gemäß Anspruch 7, wobei der erste öffentliche Schlüssel der vertrauenswürdigen Partei (14) ein öffentlicher Schlüssel eines diskreten Logs ist.

9. Ein Verfahren für eine Computervorrichtung (14) einer vertrauenswürdigen Partei zum Erzeugen eines impliziten Zertifikats zur Verwendung durch einen ersten Korrespondent in einem kryptographischen "öffentlicher Schlüssel"-System, wobei das Verfahren aufweist, dass die Computervorrichtung (14) der vertrauenswürdigen Partei:
einen verschlüsselten öffentlichen Schlüssel X_{A}' von einem anderen Korrespondent (12) empfängt;
den verschlüsselten öffentlichen Schlüssel X_{A}' unter Verwendung eines deterministischen Verschlüsselungsschemas entschlüsselt, um einen öffentlichen Schlüssel X_{A} zu erlangen, wobei der öffentliche Schlüssel X_{A} unter Verwendung eines privaten Schlüssels d" der einen Computervorrichtung (14) entschlüsselt wird;
den öffentlichen Schlüssel X_{A} verwendet, um "privater Schlüssel"-Rekonstruktionsdaten zur Verwendung durch den anderen Korrespondent (12) zu erzeugen;
die "privater Schlüssel"-Rekonstruktionsdaten verschlüsselt durch Kombinieren des öffentlichen Schlüssels X_{A} und eines anderen privaten Schlüssels k_{CA} der einen Computervorrichtung (14), um einen neuen Schlüssel R zu erlangen, und die "privater Schlüssel"-Rekonstruktionsdaten unter Verwendung des neuen Schlüssels R verschlüsselt; und
die verschlüsselten "privater Schlüssel"-Rekonstruktionsdaten an den anderen Korrespondent (12) weiterleitet.

10. Das Verfahren gemäß Anspruch 9, wobei der private Schlüssel d" der einen Computervorrichtung (14) ein privater RSA-Schlüssel ist und das deterministische Entschlüsselungsschema ein RSA-Entschlüsselungsschema ist.

11. Das Verfahren gemäß Anspruch 9 oder 10, wobei der andere private Schlüssel k_{CA} der einen Computervorrichtung (14) ein privater Langzeit-Schlüssel der einen Computervorrichtung (14) ist.

12. Das Verfahren gemäß einem der Ansprüche 9 bis 11, wobei die "privater Schlüssel"-Rekonstruktionsdaten die Form ex_{CA} + k_{CA} (mod n) haben, wobei:
e ein Hash eines impliziten Zertifikats ist,
x_{CA} ein kurzlebiger privater Schlüssel der vertrauenswürdigen Partei (14) ist,
k_{CA} ein privater Langzeit-Schlüssel der vertrauenswürdigen Partei (14) ist, und
n die Ordnung einer Gruppe ist, über die das kryptographische System implementiert ist.

13. Das Verfahren gemäß einem der Ansprüche 9 bis 12, das weiter aufweist ein Erzeugen eines impliziten Zertifikats, das "öffentlicher Schlüssel"-Rekonstruktionsdaten und eine Identität des anderen Korrespondents (12) enthält, und Senden des impliziten Zertifikats an den anderen Korrespondent (12).

## Revendications

1. Procédé d'établissement d'une clé privée k_{A} pour une utilisation dans un système cryptographique à clé publique établi entre un premier dispositif informatique correspondant (12) et un deuxième dispositif informatique correspondant (13), chacun dudit premier dispositif informatique (12) et dudit deuxième dispositif informatique (13) comprenant une unité cryptographique (18) pour effectuer des opérations cryptographiques, ledit procédé comprenant ledit premier dispositif informatique correspondant (12) :
a) établissant (104) une valeur privée x_{A} à partir d'une sortie d'un générateur de nombres aléatoires (34) ;
b) calculant (106) une clé publique correspondante X_{A} à partir de ladite valeur privée x_{A};
c) cryptant (108) ladite clé publique correspondante X_{A} en utilisant un schéma de cryptage déterministe pour établir une clé publique cryptée X_{A}', ladite clé publique cryptée X_{A}' étant cryptée en utilisant une première clé publique d'un tiers de confiance ;
d) transférant (110) ladite clé publique cryptée X_{A}' audit tiers de confiance (14) ;
e) recevant (128) à partir dudit tiers de confiance (14) des données de reconstruction de clé privée cryptée et un certificat implicite, ledit certificat implicite étant basé sur ladite clé publique correspondante X_{A} et sur une clé publique de tiers de confiance X_{CA} ;
f) appliquant (134) une clé de décryptage (R) pour récupérer lesdites données de reconstruction de clé privée, ladite clé de décryptage correspondant à une combinaison de ladite valeur privée x_{A} et d'une clé publique à long terme Q_{CA} dudit tiers de confiance (14) ;
g) calculant (136) ladite clé privée k_{A} à partir desdites données de reconstruction de clé privée, ladite clé privée k_{A} étant une clé privée de logarithme discret correspondant à une clé publique Q_{A} du premier dispositif informatique ;
moyennant quoi ledit premier dispositif informatique correspondant (12) peut utiliser ladite clé privée k_{A} dans un transfert d'informations avec ledit deuxième dispositif informatique correspondant (13) comportant ledit certificat implicite, et moyennant quoi ledit deuxième dispositif informatique correspondant (13) est capable de recevoir ledit certificat implicite et de récupérer ladite clé publique Q_{A} du premier dispositif informatique à partir dudit certificat implicite et ladite clé publique de tiers de confiance Q_{CA}.

2. Procédé selon la revendication 1, dans lequel ledit schéma de cryptage déterministe est un schéma de cryptage RSA et ladite première clé publique dudit tiers de confiance (14) est une clé publique RSA.

3. Procédé selon la revendication 1 ou 2, dans lequel ledit certificat implicite contient des données de reconstruction de clé publique et une identité dudit premier dispositif informatique correspondant (12).

4. Procédé selon la revendication 3, dans lequel lesdites données de reconstruction de clé privée sont une combinaison dudit certificat implicite, d'une clé privée éphémère x*_{CA}* dudit tiers de confiance (14) et d'une clé privée à long terme *k_{CA}* dudit tiers de confiance (14).

5. Procédé selon la revendication 4, dans lequel lesdites données de reconstruction de clé privée ont la forme *ex_{CA}* + *k_{CA}* (mod *n*), où e est un hachage dudit certificat implicite, et *n* est l'ordre d'un groupe sur lequel ledit système cryptographique est mis en oeuvre.

6. Dispositif informatique (12) destiné à être utilisé dans un système cryptographique pour échanger des informations avec d'autres dispositifs en utilisant des protocoles cryptographiques de clé publique, ledit dispositif (12) comprenant :
une unité cryptographique (18) ayant un générateur de nombres aléatoires (34) ;
une mémoire (30) pour stocker des paramètres dudit système cryptographique ; et
une unité arithmétique logique (32) pour effectuer des opérations cryptographiques,
où ladite unité cryptographique (18) peut fonctionner pour :
générer une valeur privée x_{A} à partir d'une sortie dudit générateur de nombres aléatoires (34) ;
calculer une clé publique correspondante X_{A} à partir de ladite valeur privée x_{A} ;
crypter ladite clé publique X_{A} avec un schéma de cryptage déterministe, ladite clé publique cryptée X_{A}' étant cryptée en utilisant une première clé publique d'un tiers de confiance (14) ;
transférer ladite clé publique cryptée X_{A}' audit tiers de confiance (14) ;
recevoir des données de reconstruction de clé privée cryptée et un certificat implicite à partir dudit tiers de confiance (14) ;
appliquer une clé de décryptage (R) pour récupérer lesdites données de reconstruction de clé privée, ladite clé de décryptage correspondant à une combinaison de ladite valeur privée x_{A} et d'une clé publique à long terme Q_{CA} dudit tiers de confiance (14) ; et,
obtenir à partir de celle-ci une clé privée k_{A} pour une utilisation dans des communications avec d'autres dispositifs (13).

7. Dispositif informatique (12) selon la revendication 6, dans lequel ladite première clé publique dudit tiers de confiance (14) est une clé publique RSA dudit tiers de confiance (14) stockée sur ladite mémoire (30).

8. Dispositif informatique selon la revendication 7, dans lequel ladite première clé publique dudit tiers de confiance (14) est une clé publique de logarithme discret.

9. Procédé pour un dispositif informatique de tiers de confiance (14) générant un certificat implicite pour une utilisation par un premier correspondant (13) dans un système cryptographique à clé publique, ledit procédé comprenant ledit dispositif informatique de tiers de confiance (14) :
recevant à partir d'un autre correspondant (12) une clé publique cryptée X_{A}' ;
décryptant ladite clé publique cryptée X_{A}' en utilisant un schéma de cryptage déterministe pour obtenir une clé publique X_{A}, ladite clé publique X_{A} étant décryptée en utilisant une clé privée d" dudit dispositif informatique (14) ;
utilisant ladite clé publique X_{A} pour générer des données de reconstruction de clé privée pour une utilisation par ledit autre correspondant (12) ;
cryptant lesdites données de reconstruction de clé privée en combinant ladite clé publique X_{A} et une autre clé privée k_{CA} dudit dispositif informatique (14) pour obtenir une nouvelle clé R, et cryptant lesdites données de reconstruction de clé privée en utilisant ladite nouvelle clé R ; et
transférant lesdites données de reconstruction de clé privée cryptées audit autre correspondant (12).

10. Procédé selon la revendication 9, dans lequel ladite clé privée d" dudit dispositif informatique (14) est une clé privée RSA et ledit schéma de décryptage déterministe est un schéma de décryptage RSA.

11. Procédé selon la revendication 9 ou 10, dans lequel ladite autre clé privée k_{CA} dudit dispositif informatique (14) est une clé privée à long terme dudit dispositif informatique (14).

12. Procédé selon l'une quelconque des revendications 9 à 11, dans lequel lesdites données de reconstruction de clé privée ont la forme *ex_{CA}* + *k_{CA}* (mod *n*), où :
e est un hachage d'un certificat implicite,
*x_{CA}* est une clé privée éphémère dudit tiers de confiance (14),
*k_{CA}* est une clé privée à long terme dudit tiers de confiance (14), et
*n* est l'ordre d'un groupe sur lequel ledit système cryptographique est mis en oeuvre.

13. Procédé selon l'une quelconque des revendications 9 à 12, comprenant en outre le fait de générer un certificat implicite contenant des données de reconstruction de clé publique et une identité dudit autre correspondant (12) et d'envoyer ledit certificat implicite audit autre correspondant (12).
